# FASCICULE DE BREVET EUROPEEN

(11) **EP 0 521 097 B1**
(45) Date de publication et mention de la délivrance du brevet: **02.11.1994**
(21) Numéro de dépôt: 91907265.2
(22) Date de dépôt: 19.03.1991
(51) Int. Cl.: G01B 5/18, G01B 3/28, G01B 7/26

(54) **MOYENS POUR CONTROLER L'USURE D'UN PNEUMATIQUE ET LA GEOMETRIE D'UN TRAIN DE ROUES D'UN VEHICULE**
MITTEL ZUR KONTROLLE DER ABNUTZUNG EINES LUFTREIFENS UND DER GEOMETRIE EINES ACHSSATZES EINES FAHRZEUGES
DEVICE FOR MONITORING THE WEAR ON A TYRE AND THE GEOMETRY OF A VEHICLE'S ROAD WHEELS

(30) Priorité: 19.03.1990 FR 9003696; 25.06.1990 FR 9008198
(43) Date de publication de la demande: 07.01.1993
(73) Titulaire: GALVIN, Robert, F-69100 Villeurbanne (FR); CANOVAS, Gines, F-69480 Ambérieux d'Azergues (FR); DEBILLY, Marc, F-69620 Saint-Laurent-d'Oingt (FR)
(72) Inventeur: CANOVAS, Gines, F-69480 Ambérieux-d'Azergues (FR); DEBILLY, Marc, F-69620 Saint-Laurent-d'Oingt (FR); BOIREAU, Christian, F-69370 Saint-Didier-au-Mont-d'Or (FR)
(74) Mandataire: Perrier, Jean-Pierre
(86) Numéro de dépôt international: FR9100221
(87) Numéro de publication internationale: WO9114919

(56) Documents cités:
- DE-A- 2 900 040
- GB-A- 2 219 401
- GB-A- 2 220 491
- US-A- 3 170 243
- US-A- 4 227 308
- Patent Abstracts of Japan, vol. 4, no. 153 (P-33)(635), 25 October 1980, & JP-A-55101803
- Patent Abstracts of Japan, vol. 7, no. 212 (P-224)(1357), 20 September 1983, & JP-A-58106405

## Description

Pour contrôler l'usure d'un pneumatique, il est connu d'utiliser les jauges de profondeur comportant un palpeur apte à s'engager dans chaque gorge d'un pneumatique, une face d'appui apte à venir en contact avec les sommets des nervures et un moyen de lecture donnant la profondeur d'engagement du palpeur dans la gorge.

De telles jauges sont soit mécaniques, cas dans lequel la lecture est effectuée sur une échelle graduée, soit électroniques, cas dans lequel elles comportent des moyens convertissant la position du palpeur en un signal électrique, analogique ou numérique, des moyens de traitement et de calcul et des moyens d'affichage du résultat de la mesure.

Le dispositif décrit dans le brevet US 4 631 831 comporte également des moyens mémorisant les valeurs de chaque mesure, calculant la valeur moyenne de ces mesures et transmettant ce résultat aux moyens d'affichage.

Un tel appareil fournit donc la valeur moyenne, exprimée en millimètres, de la profondeur des nervures et, en conséquence, indique uniquement une valeur relative à l'usure du pneumatique permettant la gestion d'un parc de véhicules.

La présente invention a pour but de fournir des moyens, du type précité, qui permettent, en plus et à partir d'une mesure de l'usure d'un pneumatique, de détecter les défauts de géométrie du train portant ce pneumatique, à savoir, carrossage, parallélisme, chasse, et cela sans que l'opérateur ait besoin de procéder à un quelconque calcul.

Ces moyens sont du type comprenant un boîtier portable, un palpeur mobile par rapport à une face d'appui et apte à mesurer la profondeur de chaque gorge de la bande de roulement du pneumatique, des moyens convertissant la position du palpeur en un signal, des moyens mémorisant ce signal, des moyens de traitement et de calcul traitant chaque signal et envoyant une information à un moyen d'affichage visuel.

Selon l'invention, ils comprennent aussi des moyens convertissant chacune des mesures de profondeur, effectuées en au moins deux points latéraux opposés de la bande de roulement, sous forme d'un taux d'usure, déterminé par référence à une profondeur de gorge correspondant à une usure nulle et mémorisée dans les moyens de traitement et de calcul, des moyens provoquant l'affichage et la mémorisation de chaque résultat de mesure, et au moins un moyen de commande apte à déclencher les moyens de traitement et de calcul pour comparer les résultats de mesure mémorisés et envoyer aux moyens d'affichage une information indiquant l'état de la géométrie du pneu.

Ainsi, après avoir pris connaissance du taux d'usure du pneumatique sur chaque zone de mesure, l'opérateur peut, par simple action sur une commande manuelle, et grâce aux moyens de traitement et de calcul précédemment utilisés pour convertir la profondeur en pourcentage, provoquer l'affichage d'une information sur l'état de la géométrie du train.

Selon les formes d'exécution, cette information est constituée par le taux d'usure le plus important ou par le taux correspondant à l'écart entre les usures mesurées. Bien entendu, si l'écart entre les usures affichées est nul, les moyens d'affichage indiquent une valeur nulle, c'est à dire zéro, ce qui indique que l'usure de la bande de roulement est régulière et que la géométrie du train n'a pas à être examinée, ce qui n'est pas le cas pour toute autre valeur d'écart.

Dans une forme d'exécution de l'invention, les moyens de contrôle comprennent, sur la face du boîtier comportant les moyens d'affichage et à proximité d'une représentation symbolique d'au moins une roue du véhicule, d'une part, autant de moyens de signalisation lumineux que le nombre de mesures devant être effectuées sur chaque pneumatique, ces moyens étant disposés par rapport à la représentation de la roue de la même façon que les zones de mesure sur la bande de roulement, d'autre part, un moyen de commande déclenchant, après réalisation des mesures sur chaque roue, les moyens de traitement et de calcul pour comparer les valeurs mémorisées des mesures de profondeur effectuées, afficher à l'écran la valeur maximale indiquée sous forme d'un taux par rapport à l'usure nulle et commander l'alimentation, nulle ou permanente, des moyens lumineux en rapport avec le taux d'usure propre à la position de chaque moyen, et de plus, un autre moyen de commande déclenchant en fin de cycle de mesure d'une roue, les moyens de traitement et de calcul pour comparer les valeurs mémorisées des mesures de profondeur et afficher à l'écran l'écart entre ces valeurs.

Avec cet appareil, en fin de mesure d'une roue et par actionnement des moyens de commande, l'opérateur peut être informé de la valeur du taux d'usure maximal, par lecture des moyens d'affichage, et de la localisation de ce taux, par examen des moyens de signalisation lumineux. Par l'examen des moyens d'affichage il est aussi informé du taux correspondant à l'écart entre les mesures d'usure, donc de l'état de la géométrie du train portant la roue.

Dans une forme d'exécution de l'invention, ces moyens comprennent sur la face du boîtier comportant les moyens d'affichage et à proximité d'une représentation symbolique d'au moins une roue du véhicule, d'une part, au moins autant de moyens de signalisation lumineux que le nombre de mesures devant être effectuées sur chaque pneumatique, ces moyens étant disposés par rapport à la représentation de la roue de la même façon que les zones de mesure sur la bande de roulement, d'autre part, sur un circuit des moyens de traitement et de calcul dédié au moyen de signalisation lumineux, un contact de déclenchement d'un cycle de mesure comprenant les séquences suivantes :
- alimentation du moyen de signalisation lumineux affecté à la première mesure du cycle,
- après validation de la première mesure, traitement du signal S1 de la mesure validée, affichage d'un taux d'usure correspondant à ce signal, mémorisation de ce signal, comparaison de ce signal S1 avec une valeur VR correspondant à l'usure nulle et mémorisation de la valeur résiduelle V1, et ainsi de suite pour chacune des mesures d'une roue,
- en fin de mesure d'une roue, comparaison des mesures extrêmes, affichage du résultat R1 de cette comparaison donnant le taux de l'écart d'usure de la bande de roulement,
- comparaison du résultat R1 avec une valeur K, correspondant à l'écart maximal toléré et obtention d'une valeur R2 mémorisée,
- sommation des résultats mémorisés V1...Vn, R2, analyse de la somme obtenue et transmission aux moyens lumineux d'un ordre d'alimentation, nul, permanent ou intermittent en rapport avec l'état du pneumatique et la position sur celui-ci de l'usure maximale.

Avec cet appareil de contrôle, après sélection sur le boîtier de la roue devant être mesurée, l'opérateur est guidé dans sa mesure par les moyens lumineux du boîtier, est automatiquement informé, par affichage en cours de mesure, du taux d'usure résultant de la mesure en cours, et, en fin de cycle de mesure et par affichage, du taux correspondant à l'écart entre les diverses mesures. En fin de mesure, il est aussi informé de l'état d'usure du pneu et de la géométrie du train portant la roue par les moyens synoptiques que constituent les moyens lumineux disposés à côté d'une représentation de la roue.

D'autres caractéristiques et avantages ressortiront de la description qui suit en référence au dessin schématique annexé, représentant à titre d'exemples non limitatifs, plusieurs formes d'exécution des moyens selon l'invention.
Figure 1 est une vue en perspective montrant une première forme d'exécution de l'appareil de contrôle,
Figure 2 est une vue schématique représentant ses composants essentiels,
Figure 3 est une vue partielle en coupe montrant les conditions d'utilisation de l'appareil, lorsque son palpeur est introduit dans l'une des gorges de la bande de roulement d'un pneumatique,
Figure 4 est une vue en perspective montrant une autre forme d'exécution de l'appareil,
Figure 5 est une vue schématique des composants de l'appareil de figure 4,
Figure 6 est une vue en plan par dessus représentant une autre forme d'exécution de l'appareil,
Figure 7 est une vue schématique des composants de l'appareil de figure 6.

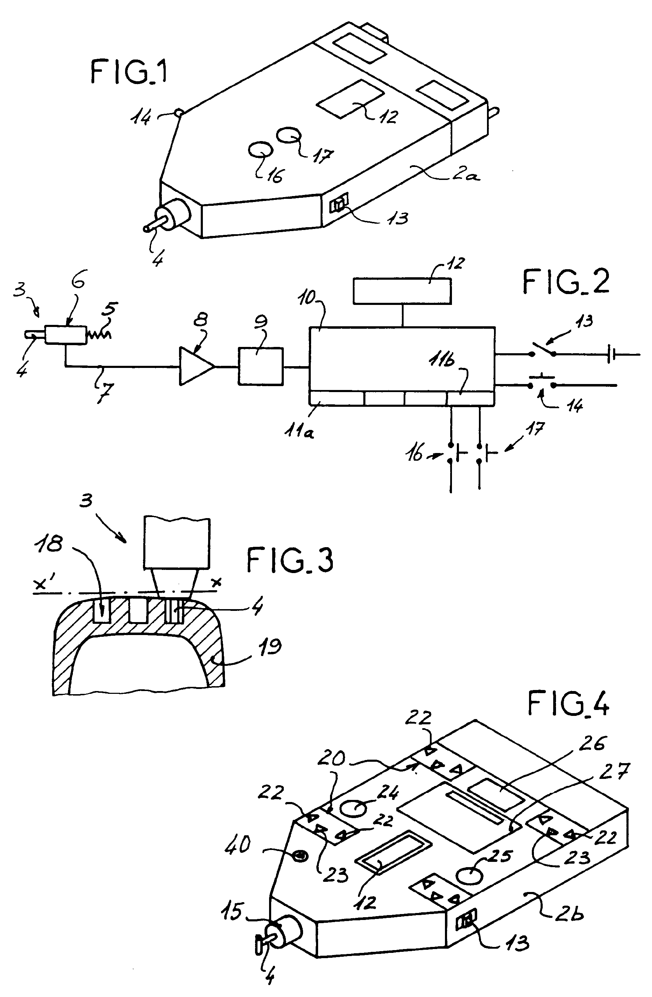

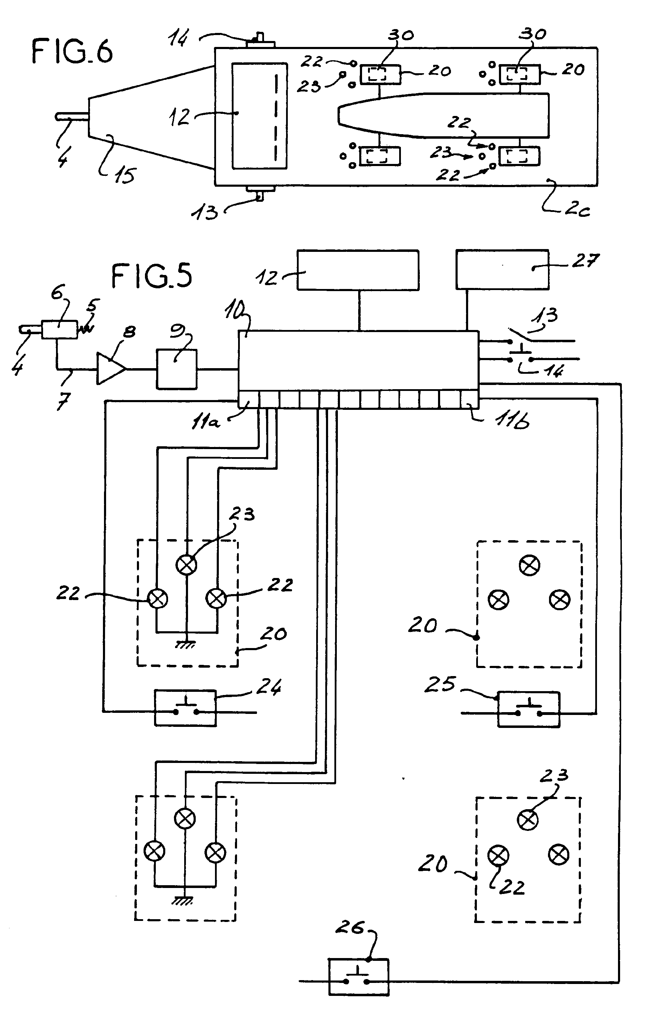

Tous les appareils représentés au dessin comprennent un boîtier portable respectivement 2a-2b et 2c, une jauge de profondeur désignée de façon générale par 3 et dont le palpeur 4, sollicité par un ressort 5, est associé à un capteur 6 convertissant les déplacements du palpeur en signaux électriques, proportionnels ou numériques. Comme le montre la figure 2, le capteur est relié par un circuit 7 à un amplificateur 8 suivi, si les signaux transmis par le capteur 6 sont analogiques, d'un convertisseur analogiquenumérique 9. Le circuit 7 aboutit à un ensemble de traitement et de calcul 10, en général constitué par un microprocesseur, commandant le fonctionnement des moyens d'affichage 12, par exemple un afficheur à cristaux liquides. Chaque appareil comporte également un bouton de marche-arrêt 13 et des moyens 14 de validation de la mesure effectuée, moyens qui, dans la forme d'exécution des figures 1 et 6, sont constitués par un bouton poussoir, tandis que, dans la forme d'exécution représentée à la figure 4, ils sont constitués par un contact disposé dans le nez 15 de l'appareil. Les moyens de traitement 10 sont associés à des mémoires effaçables 11a, et à des mémoires non effaçables 11b, et à des moyens de remise à zéro des mémoires 11a.

Dans la forme d'exécution représentée aux figures 1 à 3, l'appareil de contrôle comporte deux moyens de commande 16-17 constitués par des boutons poussoirs accessibles depuis la face supérieure du boîtier et apte à déclencher le fonctionnement des moyens de traitement et de calcul 10.

Plus précisément, après que l'appareil ait été mis en marche par actionnement du bouton de marche-arrêt 13, l'opérateur engage le palpeur 4 de celui-ci dans l'une des gorges latérales 18 de la bande de roulement d'un pneumatique 19, en prenant soin de donner à ce palpeur une direction radiale par rapport à l'axe de rotation de la roue. Lorsque le palpeur est en contact avec le fond de la gorge, l'opérateur continue à approcher l'appareil jusqu'à ce que son nez 15 vienne en butée sur la face des nervures encadrant la gorge. Dans ces conditions, les moyens 6 convertissent la position du palpeur 4 en signaux analogiques. Ces signaux sont convertis par les moyens 9 en signaux numériques. Les moyens de traitement et de calcul mémorisent cette information et, éventuellement, la comparent avec une valeur mémorisée correspondant à une profondeur de gorge ayant un taux d'usure nul, et envoient à l'afficheur 12 une information du taux d'usure. Il est ensuite procédé à au moins une seconde mesure dans la gorge de la bande de roulement qui est opposée à celle où a été effectuée la première mesure. Les signaux correspondants à la profondeur mesurée sont également mémorisés et éventuellement comparés à la valeur de référence pour envoyer à l'afficheur 12 une autre information du taux d'usure.

Lorsque ces mesures ont été effectuées, l'opérateur actionne le bouton 16, ce qui a pour effet d'amener les moyens de traitement et de calcul 10, à comparer les valeurs mémorisées des deux premières mesures, de sélectionner la valeur correspondante à la plus grande usure de la bande de roulement, de transformer cette valeur en pourcentage et de provoquer l'affichage de ce pourcentage sur l'afficheur 12. Lorsque l'opérateur appuie sur le contact 17, les moyens de traitement et de calcul comparent à nouveau les deux valeurs mémorisées et, s'il y a écart entre elles, convertissent cet écart en différence d'usure qui est affichée à l'afficheur 12.

Il ressort de ce qui précède qu'après contrôle du taux d'usure de la bande de roulement du pneumatique, l'opérateur peut, par simple lecture de l'afficheur 12, connaître la différence d'usure et déduire, de l'état des bandes de roulement, l'état de la géométrie des moyens liant la roue au châssis du véhicule. Plus précisément, si l'écart entre les deux valeurs mesurées est nul, l'usure du pneumatique est régulière, mais si cet écart a une valeur comprise entre 0 et 99 %, cela indique que la bande de roulement est inclinée par rapport à la position x′-x que sa face périphérique devrait avoir, et que manifestement, il existe un dérèglement de la géométrie des moyens de liaison de la roue par rapport au châssis, ou détérioration du châssis.

Dans la forme d'exécution représentée aux figures 4 à 5, l'appareil de contrôle comporte sur l'une des faces de son boîtier 2, quatre représentations graphiques 20 des quatre roues d'un véhicule, et réparties comme elles sur la face du boîtier. Chaque représentation graphique est associée à des moyens de signalisation lumineux 22 constitués, par exemple, par des diodes électroluminescentes. Le nombre de ces moyens 22 est égal au nombre de mesures qu'il convient d'effectuer sur la bande de roulement de chaque roue, et par exemple, sont au nombre de deux dans cette forme d'exécution. La figure 4 montre que les diodes 22 sont disposées par rapport à la représentation graphique 20 de la roue de la même façon que doivent être effectuées les mesures sur la bande de roulement de cette roue. Dans cette forme d'exécution, elles sont associées à une autre diode 23 disposée différemment par rapport à elles et, par exemple, en avant. En pratique, la diode 23 est de couleur verte et celles 22 sont de couleur rouge.

Comme le montre la figure 5, le circuit de commande des moyens de traitement 10 comporte deux boutons 24 et 25, intervenant sur l'alimentation des diodes 22 et 23, et un bouton 26 déclenchant le fonctionnement d'une imprimante 27 sous le contrôle des moyens de traitement et de calcul 10. Ces boutons 24 à 26 sont accessibles depuis la face du boîtier 2b comportant les représentations graphiques 20 des roues.

Dans la phase de mesure, le fonctionnement de cet appareil de contrôle est le même que celui décrit précédemment, à savoir que, pour chaque roue, l'opérateur effectue un palpage en deux points opposés de la bande de roulement et que la valeur des profondeurs de gorge, convertie en signaux numériques, est mémorisée dans les moyens de traitement et de calcul 10 jusqu'à ce que l'opérateur actionne le bouton 24. Dans ces conditions et comme précédemment, les moyens de traitement et de calcul 10 comparent les valeurs mesurées, sélectionnent la valeur la plus grande et envoient à l'afficheur 12, une valeur indiquant le taux d'usure correspondant à cette valeur. Simultanément, les moyens de traitement et de calcul 10 commandent l'alimentation des diodes 22 et 23 en fonction de la mesure, à savoir alimentation de la diode 23 de couleur verte si la bande de roulement présente une usure normale, dans les limites autorisées, ou alimentation de l'une des diodes 22 si l'usure constatée est au-delà de la valeur normale. Dans ces conditions, la diode 22, qui est alimentée, est celle qui est située à l'intérieur du boîtier, si la bande de roulement est plus usée vers l'intérieur, et à l'extérieur du boîtier, si cette bande de roulement est plus usée sur sa partie extérieure.

Face à ces informations visuelles et lumineuses, l'opérateur déduit s'il se trouve en présence d'un dérèglement de la géométrie du train, dérèglement dont il obtient la valeur en actionnant le bouton 25. En effet, dans ces conditions, et comme pour le bouton 17 de la forme d'exécution précédente, les moyens de traitement et de calcul 10 comparent les deux valeurs des mesures et en convertissent l'écart en un pourcentage qui s'affiche à l'afficheur 12. Cet écart peut aussi être fourni sur un support, en actionnant le bouton 26 commandant la mise en marche de l'imprimante 27.

Dans une variante de réalisation, les moyens de signalisation lumineux 23 sont constitués par une diode bicolore, rouge et verte. Dans cette configuration, en fin de comparaison des valeurs mesurées, l'état d'usure du pneumatique est signalé soit par la couleur verte, si l'usure est normale, soit par la couleur rouge si l'usure est considérée anormale, et ceci indépendamment des moyens lumineux constitués par les diodes 22 qui indiquent le côté du dérèglement.

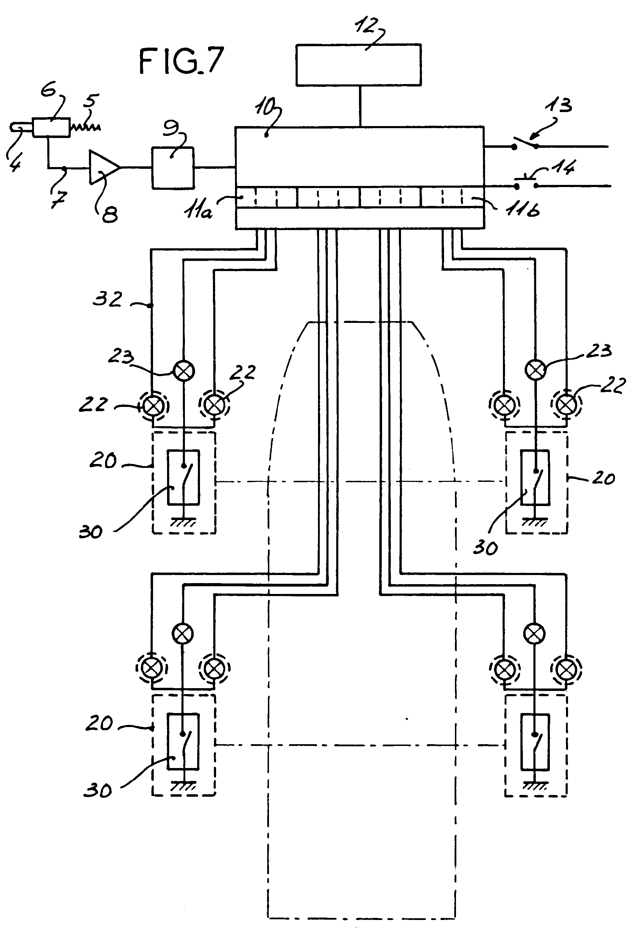

Bien que, dans les deux formes d'exécution qui précèdent, l'appareil de contrôle selon l'invention permette d'indiquer l'état de dérèglement de la géométrie d'une roue sur son train, et cela sans que l'opérateur ait à procéder à un quelconque calcul, il est encore possible, par des erreurs de manipulation ou de positionnement du boîtier par rapport aux roues dans la phase de mesures, de parvenir à des erreurs d'interprétation des indications fournies par l'afficheur par les diodes. C'est pour remédier à cela que l'appareil représenté aux figures 6 à 7 comporte, pour chaque groupe de moyens lumineux 22-23, et sous les representations graphiques 20 de chaque roue du véhicule, un bouton 30 qui intervient sur les moyens de traitement et de calcul 10 pour, d'une part, organiser et gérer les mesures, et d'autre part, lancer un cycle de mesures pour chaque roue.

Avec cet appareil, après actionnement du bouton marche-arrêt 13 commandant son alimentation, l'opérateur doit d'abord procéder à la sélection sur l'appareil de la représentation graphique 20 de la roue qu'il envisage de mesurer. Cette sélection s'effectue en appuyant sur le bouton 30 disposé sous la représentation graphique choisie. Ce contact, disposé sur un circuit 32 des moyens de traitement et de calcul 10, dédié aux moyens lumineux 22 et 23 juxtaposés à la représentation 20 choisie, déclenche le cycle de mesure propre à la roue, cycle dont la première séquence consiste à provoquer l'alimentation de la diode 23 et de l'une des diodes 22, à savoir par exemple de celle disposée à l'extérieur sur la représentation. Par l'allumage de ces diodes, l'opérateur est informé que le groupe est sélectionné, que le cycle de mesures va commencer et qu'il doit engager le palpeur 4 du boîtier dans la gorge la plus extérieure de la bande de roulement de la roue choisie.

Comme dans les formes d'exécution précédentes, l'opérateur engage le palpeur 4 dans la gorge 18 choisie jusqu'au contact avec son fond et continue d'avancer l'appareil jusqu'à ce que la face d'appui du nez vienne en contact avec la bande de roulement.

Durant cette opération, l'unité de traitement et de calcul 10 envoie à l'afficheur 12 des informations lui permettant d'afficher un taux d'usure qui va en croissant jusqu'au contact du nez 15 sur la bande de roulement.

Lorsque l'opérateur appuie sur le bouton de validation 14, la valeur S1 correspondant au taux affiché est mémorisée et comparée avec une valeur VR correspondant à l'usure nulle. La valeur résiduelle V1, résultant de cette comparaison, est à son tour mémorisée.

A la fin de cette première opération de mesure, l'unité de traitement 10 interrompt l'alimentation de la diode 22 disposée à l'extérieur de la même représentation, graphique 20 et commande l'alimentation de la diode 22 disposée à l'intérieur de la même représentation pour signaler à l'opérateur qu'il peut effectuer la seconde mesure sur le côté intérieur de la bande de roulement. La procédure de mesure est la même et conduit à la mémorisation d'un signal S2 et d'une valeur résiduelle V2.

En fin de mesure d'une roue, l'unité de traitement et de calcul 10 compare les valeurs des mesures extrêmes S1-S2, et envoient à l'afficheur 12 une information R1 correspondant à la différence entre ces valeurs, exprimée en taux d'usure du résultat R1 obtenu. Il en résulte que l'opérateur a instantanément connaissance de l'écart du taux d'usure sur la bande de roulement, et en conséquence, de l'état du dérèglement de la géométrie de la roue sur son train.

Simultanément, l'unité de traitement et de calcul compare la valeur de R1 avec une valeur K correspondant à l'écart maximal toléré et mémorise la valeur du résultat R2 obtenu. Cette valeur K est soit mémorisée, soit calculée.

Les moyens de traitement assurent alors la sommation des valeurs numériques des résultats mémorisés V1-V2-R2, analysent le résultat final et transmettent aux moyens lumineux 22 et 23 un ordre d'alimentation nul, permanent ou intermittent, en rapport avec l'état du pneumatique et la position sur celui-ci du défaut de géométrie.

Plus précisément, lorsque le résultat de la sommation indique que le pneumatique a un bon état d'usure, et est sans défaut géométrique, les moyens de traitement 10 commandent l'alimentation de la diode 23 de couleur verte. Si la sommation fait apparaître que l'usure maximale est dépassée d'un côté de la bande de roulement, les moyens de traitement 10 provoquent l'alimentation de la diode rouge 22 correspondante, diode qui indique également les défauts de géométrie. En présence d'une usure maximale dépassée sur toute la largeur de la bande de roulement, les deux diodes 22 rouges sont alimentées. Enfin, en présence d'une dissymétrie d'usure excessive d'un côté, la diode rouge correspondante est alimentée de manière intermittente, pour mieux attirer l'attention.

Il ressort qu'en fin de cycle de mesure d'une roue, et en complément des informations données par l'afficheur 12, l'opérateur dispose d'une information synoptique lumineuse l'orientant dans sa décision finale de remplacer le pneumatique ou de procéder à la vérification de la géométrie de la roue sur son train.

Bien entendu, l'opérateur procède de la même façon pour chacune des roues du véhicule et grâce au maintien de l'alimentation électrique des moyens lumineux des différents groupes correspondant aux roues du véhicule, l'opérateur dispose, à la fin de l'opération de contrôle des roues d'un véhicule, d'un tableau synoptique retraçant tous les défauts relevés et lui permettant encore mieux d'apprécier les défauts de géométrie des trains de roues, s'il en existe.

Dans une variante de réalisation, le cycle de mesures déclenché par l'un des deux boutons de commande 30 associés à l'une quelconque des roues d'un train de roues, comprend, après la mesure des roues du train, la comparaison entre les valeurs mémorisées S1-S2 d'une roue avec les valeurs mémorisées S1′-S2′ de l'autre roue du même train, la sélection de la valeur correspondant à l'usure la plus grande, la comparaison de cette valeur résiduelle avec une valeur de référence mémorisée H, correspondant à l'écart maximal toléré entre les usures des deux roues d'un même train. A partir d'un seuil de la valeur obtenue par cette comparaison, les moyens de traitement et de calcul 10 commandent l'alimentation du moyen de signalisation 22 disposé, sur la représentation synoptique du train de roues, au même endroit qu'est située l'usure la plus grande sur les roues contrôlées.

Ce cycle supplémentaire permet de vérifier la géométrie du train de roues, notamment, lorsque les taux d'usure de chacune des roues ont des écarts insuffisants pour être considérés comme un défaut de géométriedu train de roues.

Il est évident que le dispositif, qui a été décrit ci-dessus dans le cadre de son application au contrôle de l'usure des pneumatiques et au contrôle de la géométrie des trains de roues d'un véhicule automobile à quatre roues, peut être aménagé, sans sortir du cadre de l'invention, pour permettre le contrôle d'un véhicule comportant plus de quatre roues, tel qu'un camion. De même, on ne sortirait pas du cadre de l'invention en associant à chaque roue, non pas deux moyens de signalisation lumineux 22, mais trois ou quatre, par exemple pour effectuer trois ou quatre mesures sur des pneumatiques larges.

Enfin, le microprocesseur 10, qui est disposé dans le boîtier, peut, de façon connue, être raccordée, par exemple par une prise 40 visible figure 4, à tout autre moyen de traitement des informations numériques ou à des moyens permettant de formaliser, sur papier ou sur support magnétique, les informations contenues dans ses mémoires temporaires 11a.

## Revendications

1. Moyens pour contrôler l'usure d'un pneumatique et la géométrie d'un train de roues d'un véhicule, du type comprenant un boîtier portable (2a-2b-2c), un palpeur (4) mobile par rapport à une face d'appui (15) et apte à mesurer la profondeur de chaque gorge de la bande de roulement (18) du pneumatique, des moyens (6-8-9) convertissant la position du palpeur en un signal, des moyens (11a) mémorisant ce signal, des moyens (10) de traitement et de calcul traitant chaque signal et envoyant une information à un moyen d'affichage visuel (12), caractérisés en ce qu'ils comprennent, aussi, dans les moyens de traitement et de calcul (10) des moyens convertissant chacune des mesures de profondeur, effectuées en au moins deux points latéraux opposés de la bande de roulement, en taux d'usure déterminé par référence à une valeur mémorisée correspondant à une profondeur de gorge avec une usure nulle, des moyens provoquant l'affichage et la mémorisation de chaque résultat de mesure, et au moins un moyen de commande (17-25-30) apte à déclencher les moyens de traitement et de calcul (10) pour comparer les résultats de mesure mémorisés et envoyer au moyen d'affichage (12) une information indiquant l'état de la géométrie du pneumatique.

2. Moyens selon la revendication 1 caractérisés en ce qu'ils comprennent au moins un moyen de commande (16) déclenchant, après réalisation des mesures, les moyens (10) de traitement et de calcul pour comparer les valeurs mémorisées des mesures de profondeur effectuées sur le pneumatique et envoyer aux moyens d'affichage (12) une information correspondant au taux d'usure de la bande de roulement du pneumatique dans sa partie la plus usée.

3. Moyens selon l'une quelconque des revendications 1 et 2, caractérisés en ce qu'ils comprennent, sur la face du boîtier (2b) comportant les moyens d'affichage (12) et à proximité d'une représentation symbolique (20) d'au moins une roue du véhicule, d'une part, autant de moyens de signalisation lumineux (22) que le nombre de mesures devant être effectuées sur chaque pneumatique, ces moyens (22) étant disposés par rapport à la représentation (20) de la roue de la même façon que les zones de mesure sur la bande de roulement, d'autre part, un moyen de commande (24) déclenchant, après réalisation des mesures sur chaque roue, les moyens (10) de traitement et de calcul pour comparer les valeurs mémorisées des mesures de profondeur effectuées, communiquer à l'afficheur (12) une information sur la valeur maximale indiquée sous forme d'un taux d'usure par rapport à l'usure nulle et commander l'alimentation, nulle ou permanente, des moyens lumineux (22) en rapport avec le taux d'usure propre à la position de chaque moyen, et de plus, un autre moyen de commande (25) déclenchant, en fin de cycle de mesure d'une roue, les moyens (10) de traitement et de calcul pour comparer les valeurs mémorisées des mesures de profondeur et communiquer à l'afficheur (12) une information sur l'écart entre ces valeurs.

4. Moyens selon la revendication 1, caractérisés en ce qu'ils comprennent sur la face du boîtier (2c) comportant les moyens d'affichage (12) et à proximité d'une représentation symbolique (20) d'au moins une roue du véhicule, d'une part, au moins autant de moyens (22) de signalisation lumineux que le nombre de mesures devant être effectuées sur chaque pneumatique, ces moyens étant disposés par rapport à la représentation (20) de la roue de la même façon que les zones de mesure sur la bande de roulement, d'autre part, sur un circuit (32) des moyens (10) de traitement et de calcul dédié aux moyens (22) de signalisation lumineux, un moyen (30) de déclenchement d'un cycle de mesure comprenant les séquences suivantes :
- alimentation du moyen (22) de signalisation lumineux affecté à la première mesure du cycle,
- après validation de la première mesure, traitement du signal S1 de la mesure validée, affichage d'un taux d'usure correspondant à ce signal, mémorisation de ce signal, comparaison de ce signal S1 avec une valeur VR correspondant à l'usure nulle et mémorisation de la valeur résiduelle V1, et ainsi de suite pour chacune des mesures d'une roue,
- en fin de mesure d'une roue, comparaison des mesures extrêmes (S1-S2), affichage du résultat R1 de cette comparaison donnant le taux de l'écart d'usure de la bande de roulement,
- comparaison du résultat R1 avec une valeur K, correspondant à l'écart maximal toléré et obtention d'une valeur R2 mémorisée,
- sommation des résultats mémorisés V1, Vn et R2, analyse de la somme obtenue et transmission aux moyens lumineux (22) d'un ordre d'alimentation, nul, permanent ou intermittent en rapport avec l'état du pneumatique et la position sur celui-ci de l'usure maximale.

5. Moyens selon l'une quelconque des revendications 3 et 4, caractérisés en ce qu'ils comprennent au moins quatre groupes de moyens (22) de signalisation lumineux juxtaposés chacun à la représentation (20) d'une roue.

6. Moyens selon la revendication 5, caractérisés en ce que les représentations (20) de roue, associées chacune à un groupe de moyens (22) de signalisation lumineuse, sont réparties sur la face du boîtier comme les roues d'un véhicule et chacun de ces groupes est associé au moyen (30) de sélection de la roue et de mise en route du cycle de mesure.

7. Moyens selon l'une quelconque des revendications 1, 4, 5 et 6 caractérisés en ce que le cycle de mesure comprend, après la mesure des roues d'un même train, la comparaison entre les valeurs mémorisées S1...Sn, S1′...Sn′des signaux numériques provenant des cycles de mesure du train considéré, la sélection des valeurs correspondant à l'écart le plus grand, la comparaison de cet écart avec une valeur de référence mémorisée H, correspondant à l'écart maximal toléré, et à partir d'un seuil de la valeur ainsi obtenue, l'alimentation du moyen (22) de signalisation lumineux ayant sur le boîtier la position qu'a cet écart sur le pneumatique du train considéré.

8. Moyens selon l'une quelconque des revendications 4 à 7, caractérisés en ce que les moyens (22) de signalisation lumineux affectés à une roue sont associés à un moyen (23) de signalisation lumineux qui, décalé par rapport à eux, mais alimenté, comme eux, sous le contrôle des moyens (10) de traitement et de calcul, constitue moyen visuel de confirmation de la sélection de la roue et moyen d'indication du bon état d'usure du pneumatique.

## Patentansprüche

1. Mittel zum Überprüfen der Abnutzung eines Reifens und der Geometrie eines Achssatzes eines Fahrzeugs, umfassend ein tragbares Gehäuse (2a-2b-2c), einen Fühler (4), der bezüglich einer Anlagefläche (15) beweglich ist und in der Lage ist, die Tiefe jeder Rille des Laufbands (18) des Reifens zu messen, Mittel (6-8-9), die die Stellung des Fühlers in ein Signal umwandeln, Mittel (11a), die dieses Signal speichern, Verarbeitungs- und Rechenmittel (10), die jedes Signal verarbeiten und eine Information an ein visuelles Anzeigemittel (12) schicken, **dadurch gekennzeichnet**, daß sie ferner in den Verarbeitungs- und Rechenmitteln (10) Mittel umfassen, die jede der an wenigstens zwei seitlich entgegengesetzten Punkten des Laufbands ausgeführten Tiefenmessungen in einen Abnutzungsgrad umwandeln, welcher bezüglich eines einer Rillentiefe mit Abnutzung Null entsprechenden, gespeicherten Werts bestimmt ist, Mittel umfassen, die die Anzeige und das Speichern jedes Meßergebnisses bewirken, sowie wenigstens ein Steuermittel (17-25-30), das die Verarbeitungs- und Rechenmittel (10) auslösen kann, um die gespeicherten Meßergebnisse zu vergleichen und dem Anzeigemittel (12) eine Information zu schicken, welche den Zustand der Geometrie des Reifens angibt.

2. Mittel nach Anspruch 1, **dadurch gekennzeichnet**, daß sie wenigstens ein Steuermittel (16) umfassen, das nach Durchführung der Messungen die Verarbeitungs- und Rechenmittel (10) auslöst, um die gespeicherten Werte der an dem Reifen ausgeführten Tiefenmessungen zu vergleichen und den Anzeigemitteln (12) eine Information zu schicken, welche dem Abnutzungsgrad des Laufbandes des Reifens in seinem am meisten abgenutzten Teil entspricht.

3. Mittel nach einem der Ansprüche 1 und 2, **dadurch** **gekennzeichnet**, daß sie auf der Fläche des Gehäuses (2b), die die Anzeigemittel (12) umfaßt, und in der Nähe einer symbolischen Darstellung (20) wenigstens eines Rades des Fahrzeugs, einerseits so viele Leuchtsignalmittel (22) umfassen, wie die Anzahl der an jedem Reifen auszuführenden Messungen beträgt, wobei diese Mittel (22) bezüglich der Darstellung (20) des Rades in der gleichen Weise angeordnet sind, wie die Meßbereiche auf dem Laufband, andererseits ein Steuermittel (24) umfassen, das nach Durchführung der Messungen an jedem Rad die Verarbeitungs- und Rechenmittel (10) auslöst, um die gespeicherten Werte der ausgeführten Tiefenmessungen zu vergleichen, der Anzeige (12) eine Information über den maximalen Wert mitzuteilen, der in Form eines Abnutzungsgrads bezüglich einer Abnutzung Null angegeben ist, und um in Zusammenhang mit dem Abnutzungsgrad die Speisung, nämlich keine oder permanente Speisung, der Leuchtmittel (22) zu steuern, die für die Position jedes Mittels geeignet ist, und darüber hinaus ein weiteres Steuermittel (25) umfassen, das am Ende des Meßzylusses eines Rades die Verarbeitungs- und Rechenmittel (10) auslöst, um die gespeicherten Tiefenmeßwerte zu vergleichen und der Anzeige (12) eine Information über die Abweichung zwischen diesen Werten mitzuteilen.

4. Mittel nach Anspruch 1, **dadurch gekennzeichnet**, daß sie auf der Fläche des Gehäuses (2c), die die Anzeigemittel (12) umfaßt, und in der Nähe einer symbolischen Darstellung (20) wenigstens eines Rades des Fahrzeugs einerseits so viele Leuchtsignalmittel (22) umfassen, wie die Anzahl der an jedem Reifen auszuführenden Messungen beträgt, wobei diese Mittel (22) bezüglich der Darstellung (20) des Rades in der gleichen Weise angeordnet sind, wie die Meßbereiche auf dem Laufband, andererseits in einem Schaltkreis (32) der Verarbeitungs- und Rechenmittel (10), der den Leuchtsignalmitteln (22) zugeordnet ist, ein Auslösemittel (30) umfassen zum Auslösen eines die folgenden Abfolgen umfassenden Meßzyklusses:
- Speisung des der ersten Messung des Zyklusses zugeordneten Leuchtsignalmittels (22),
- nach Bestätigung der ersten Messung, Verarbeitung des Signals S1 der bestätigten Messung, Anzeige eines diesem Signal entsprechenden Abnutzungsgrads, Speichern dieses Signals, Vergleich dieses Signals S1 mit einem Wert VR, der einer Abnutzung Null entpricht, und Speichern des Restwerts V1, und so weiter für jeden Meßwert eines Rades,
- am Ende der Messung eines Rades, Vergleich der Extremmessungen (S1-S2), Anzeige des Ergebnisses R1 dieses Vergleichs, das den Abweichungsgrad der Abnutzung des Laufbands angibt,
- Vergleich des Ergebnisses R1 mit einem Wert K, der einer maximalen tolerierten Abweichung entspricht, und Erhalten eines gespeicherten Werts R2,
- Addition der gespeicherten Ergebnisse V1, Vn und R2, Analyse der erhaltenen Summe und Übermittlung eines Befehls zur Speisung, nämlich keiner, permanenter oder intermittierender Speisung, im Zusammenhang mit dem Reifenzustand und der Position der maximalen Abnutzung auf diesem an die Leuchtmittel (22).

5. Mittel nach einem der Ansprüche 3 und 4, **dadurch gekenn****zeichnet**, daß sie wenigstens vier Gruppen von Leuchtsignalmitteln (22) umfassen, welche jeweils einer Darstellung (20) eines Rades benachbart angeordnet sind.

6. Mittel nach Anspruch 5, **dadurch gekennzeichnet**, daß die Raddarstellungen (20), die jeweils einer Gruppe von Leuchtsignalmitteln (22) zugeordnet sind, auf der Fläche des Gehäuses wie die Räder eines Fahrzeuges verteilt sind, und jeder dieser Gruppen ein Mittel (30) zur Radauswahl sowie zur Einleitung des Meßzyklusses zugeordnet ist.

7. Mittel nach einem der Ansprüche 1, 4, 5 und 6, **dadurch** **gekennzeichnet**, daß der Meßzyklus nach Messung der Räder einer Achse umfaßt, den Vergleich zwischen den gespeicherten Werten S1...Sn, S1′...Sn′ der numerischen Signale, die dem Meßzyklen der betrachteten Achse entstammen, die Auswahl der Werte, die der größten Abweichung entsprechen, den Vergleich dieser Abweichung mit einem gespeicherten Bezugswert H, der der maximalen tolerierten Abweichung entspricht, und ab einem Schwellenwert des so erhaltenen Werts die Speisung des Leuchtsignalmittels (22), das auf dem Gehäuse die Position aufweist, die diese Abweichung auf dem Reifen der betrachteten Achse hat.

8. Mittel nach einem der Ansprüche 4 bis 7, **dadurch** **gekennzeichnet**, daß die einem Rad zugewiesenen Leuchtsignalmittel (22) einem Leuchtsignalmittel (23) zugeordnet sind, das relativ zu ihnen versetzt, jedoch wie sie unter der Steuerung der Verarbeitungs- und Rechenmittel (10) gespeist ist, ein visuelles Bestätigungsmittel der Auswahl des Rads bilden, sowie ein Mittel zum Angeben des guten Abnutzungszustands des Reifens.

## Claims

1. A device for monitoring the wear on a tyre and the geometry of a vehicle's road wheels, of the type having a portable case (2a-2b-2c), a probe (4) movable with respect to a bearing face (15) and adapted to measure the depth of each groove of the tyre tread (18), means (6-8-9) converting the position of the probe into a signal, means (11a) memorising this signal, processing and calculation means (10) processing each signal and sending information to visual display means (12), characterised in that it also includes in the processing and calculation means (10) means converting each of the depth measurements, carried out at at least two laterally opposed points on the tread, into a rate of wear determined by reference to a memorised value corresponding to the depth of an unworn groove, means effecting the display and memorisation of each measurement result, and at least one control means (17-25-30) adapted to trigger the processing and calculation means (10) to compare the memorised measurement results and send to the display means (12) information indicating the state and geometry of the tyre.

2. Means according to Claim 1 characterised in that it has at least one control means (16) triggering the processing and calculation means (10), after the measurements have been made, to compare the memorised values of depth measurements carried out on the tyre and sending to the display means (12) information corresponding to the rate of wear of the tyre tread at its most worn portion.

3. Means according to either of Claims 1 and 2, characterised in that they have, on the face of the case (2b) including the display means (12) and close to a symbolic representation (20) of at least one wheel of the vehicle, on the one hand, as many light signalling means (22) as the number of measurements required to be carried out on each tyre, these means (22) being disposed with respect to the representation (20) of the wheel in the same way as the measuring zones on the tread, on the other hand, a control means (24) triggering the processing and calculation means (10) after the making of the measurements on each wheel, to compare the memorised values of the depth measurements carried out, to communicate to the display (12) information on the maximum value indicated in the form of a rate of wear with respect to nil wear and to control the supply, nil or permanent, to the light means (22) with respect to the wear rate proper at the position of each means, and moreover, another control means (25) triggering the processing and calculation means (10) at the end of the measuring cycle of a wheel, to compare the memorised values of depth measurements and communicate to the display (12) information on the difference between these values.

4. Means according to Claim 1, characterised in that they have on the face of the case (2c) including the display means (12) and close to a symbolic representation (20) of at least one wheel of the vehicle, on the one hand, at least as many light signalling means (22) as the number of measurements required to be carried out on each tyre, these means being disposed with respect to the representation (20) of the wheel in the same way as the measurement zones on the tread, on the other hand, on a circuit (32) processing and calculation means dedicated to light signalling means (22), a means (30) of triggering a cycle of measurement having the following sequences:
- supply of the light signalling means (22) assigned to the first measurement of the cycle,
- after validation of the first measurement, processing of the signal S1 of the validated measurement, display of a rate of wear corresponding to this signal, memorisation of this signal, comparison of this signal S1 with a value VR corresponding to nil wear and memorisation of the residual value V1, and so on for each of the measurements of a wheel,
- at the end of the measurement of a wheel, comparison of the extreme measurements (S1-S2), display of the result R1 of this comparison giving the rate of difference of wear of the tread,
- comparison of the result R1 with a value K, corresponding to the maximum difference tolerated and production of a memorised value R2,
- summation of the memorised results V1, Vn and R2, analysis of the sum obtained and transmission to the light means (22) of a supply command, nil, permanent or intermittent in respect of the state of the tyre and the position on this of the maximum wear.

5. Means according to any one of Claims 3 and 4, characterised in that they have at least four groups of light signalling means (22) each juxtaposed with the representation (20) of a wheel.

6. Means according to Claim 5, characterised in that the representations (20) of the wheel, each associated with a group of light signalling means (22), are set out on the face of the case like the wheels of a vehicle and each of these groups is associated with the means (30) for selecting the wheel and initiating the measuring cycle.

7. Means according to any one of Claims 1, 4, 5 and 6 characterised in that the measuring cycle includes, after the measurement of the wheels of the same set, the comparison between the memorised values S1...Sn, S1′...Sn′ of the numerical signals resulting from the measuring cycles of the set considered, the selection of values corresponding to the largest difference, the comparison of this difference with a memorised reference value H, corresponding to a maximum difference tolerated, and starting from a threshold of the value thus obtained, the supply of the light signalling means (22) having on the case the position of this difference on the tyres of the set considered.

8. Means according to any one of Claims 4 to 7, characterised in that the light signalling means (22) assigned to a wheel are associated with a light signalling means (23) which, offset with respect to them but supplied , like them, under the control of the processing and calculation means (10) , constitute visual means of confirmation of the selection of the wheel and means of indication of the good state of the wear of the tyre.
